# EUROPEAN PATENT APPLICATION

(11) **EP 2 426 398 A1**
(43) Date of publication of application: **07.03.2012**
(21) Application number: 10789380.2
(22) Date of filing: 04.06.2010
(51) Int. Cl.: F21S 2/00, F21V 5/00, F21V 5/04, G02F 1/13357, H01L 33/00, F21Y 101/02

(54) **ILLUMINATING DEVICE, DISPLAY DEVICE, AND TELEVISION RECEIVER**

(30) Priority: 15.06.2009 JP 2009142029
(71) Applicant: Sharp Kabushiki Kaisha, Osaka-shi, Osaka 545-8522 (JP)
(72) Inventor: KASAI, Nobuhiro, Osaka-shi, Osaka 545-8522 (JP); MOURI, Hirokazu, Osaka-shi, Osaka 545-8522 (JP)
(74) Representative: Müller-Boré & Partner Patentanwälte
(86) International application number: PCT/JP2010/059511
(87) International publication number: WO 2010/147005

(57) **Abstract**

The present invention provides a lighting device configured to produce light with a substantially averaged overall color. The lighting device 12 of the present invention includes a plurality of point light sources 17 and a chassis 14 that houses the point light sources 17. The point light sources 17 are classified in two or more color ranges A, B, and C according to colors of light. Each color range has a range defined by a square with sides each having a length of 0.01 in the EIC 1931 color space chromaticity diagram. The point light sources 17 in the different color ranges A, B, and C are housed in the chassis 14.

## Description

### TECHNICAL FIELD

The present invention relates to a lighting device, a display device and a television receiver.

### BACKGROUND ART

A liquid crystal panel included in a liquid crystal display device such as a liquid crystal television does not emit light, and thus a backlight device is required as a separate lighting device. A backlight device arranged behind the liquid crystal panel (i.e., on a side opposite from a display surface side) is known. It includes a plurality of light sources (e.g., LEDs).

Such a backlight device has a configuration in which white LEDs are installed. The white LEDs tend to produce color variances in white color. A device disclosed in Patent Document 1 is know as a device that can produce light in a target white color using white LEDs that tend to produce color variations. When light emitted by an LED is in yellowish white, a blue LED is controlled to emit higher intensity of light so that light in the target white color can be achieved.

Patent Document 1: Japanese Unexamined Patent Publication No. 2008-153039

### Problem to be Solved by the Invention

The device disclosed in Patent Document 1 uses two different types of LEDs. Therefore, the LEDs are not easy to control. Furthermore, if the white LEDs produce greenish white light, the light in the target white color cannot be achieved. LEDs that can produce light in the target white color may be selectively used to achieve light in the target white color. In this case, only selected white LEDs can be used. Namely, a larger number of white LEDs than necessary needs to be manufactured. This may lead to an increase in cost of the backlight device.

### DISCLOSURE OF THE PRESENT INVENTION

The present invention was made in view of the foregoing circumstances. An object of the present invention is to provide a lighting device that can produce light in substantially uniform overall color. Other objects of the present invention are to provide a display device including such a lighting device, and a television receiver including such a display device.

### Means for Solving the Problem

To solve the above problem, a lighting device of the present invention includes a plurality of point light sources classified in two or more color ranges according to colors of light, and a chassis. Each color range is defined by a square with sides each having a length of 0.01 in a CIE 1931 color space chromaticity diagram. The chassis houses the point light sources in different color ranges.

If point light sources in the same color range are only used, a larger number of the point light sources than necessary needs to be manufactured to obtain the required number. Furthermore, some of the point light sources may not be used. Therefore, the cost may increase. According to the present invention, the point light sources in different color ranges, each of which is defined by the square with each side having the length of 0.01 in the CIE 1931 color space chromaticity diagram, are used. The range defined by the square with each side having the length of 0.01 in the CIE 1931 color space chromaticity diagram corresponds to a range in which color variations of the point light sources are not recognized. Use of the point light sources in the different color ranges can contribute to a cost reduction in comparison to use of the point light sources in the same color range. This is because the point light sources in wider color ranges can be used. Furthermore, when the point light sources in the different color ranges are used, a uniform overall color can be achieved. Namely, light in a substantially uniform color can be achieved.

The point light sources may be arranged on an elongated board that is installed in the chassis.
By installing the board on which the point light sources are arranged, work efficiency improves in comparison to installation of the point light sources one by one.

The point light sources may be arranged in line along the longitudinal direction of the board.
With this configuration, the arrangement of the point light sources is defined according to the arrangement of the board. Therefore, the arrangement of the point light sources can be easily designed.

The point light sources may be arranged at an equal interval on the board.
With this configuration, the arrangement of the point light sources is not altered according to the board. Therefore, the board can be still used even when the size of the lighting device is altered.

The point light sources may be arranged in multiple lines along a longitudinal direction of the board.
With this configuration, the number of boards required for the respective number of sets of the point light sources can be reduced. Therefore, the number of parts can be reduced, and the work efficiency can be increased.

The point light sources arranged adjacently to each other on the board may be in the same color range or the adjacent color ranges.
Because the colors of light produced by the adjacent point light sources do not significantly differ from each other, color variations are less likely to occur.

A plurality of boards may be arranged parallel to each other, and the point light sources arranged adjacently in an arrangement direction of the boards may be in the same color range or the adjacent color ranges.
With this configuration, the colors of light produced by the point light sources adjacently arranged in the arrangement direction of the boards do not significantly different from each other. Therefore, color variations are less likely to occur.

A plurality of boards may be arranged parallel to each other. The point light sources may be arranged such that an arrangement of the point light sources on the board in a first row according to the color ranges is different from an arrangement of the point light sources on the board in a second row according to the color ranges.
In this configuration, the arrangement of the point light sources on the board in the first row according to the color ranges is different from the arrangement of the point light sources on the board in the second row according to the color ranges. Therefore, the light sources in the same color ranges are less likely to be unevenly arranged in a specific area and thus color variations are less likely to occur.

A plurality of boards may be arranged parallel to each other, and the boards arranged adjacently in an arrangement direction thereof are rotated 180 degrees from each other.
By arranging the boards in the same kind inversely to each other, the arrangement of the point light sources according to the color ranges can be altered. Therefore, color variations are less likely to occur.

A plurality of boards are arranged along the longitudinal direction thereof, and the adjacent connectors are connected by a connector.
By preparing the boards in different lengths, that is, the boards on which different numbers of the point light sources are arranged, and connected by connectors, the boards can be used in lighting devices in different sizes (or in different lengths). Namely, different boards are not required for different sizes of the lighting devices. This contributes to a cost reduction.

The connector may include a first connector and a second connector engaged with each other. At least one of the first connector and the second connector may project outward from an end of the board with respect to the longitudinal direction of the board.
Because at least one of the first connector and the second connector projects outward from the board, the first connector and the second connector can be smoothly engaged when connecting the adjacently arranged first connector and second connector.

The connector may be in ivory color or white color.
Because the connector has a relatively high light reflectivity, the connector is less likely to absorb light. Therefore, uneven brightness is less likely to occur.

The chassis may have a rectangular plan-view shape. The board may be arranged with a longitudinal direction thereof aligned with a longitudinal direction of the chassis.
With this configuration, the number of boards can be reduced in comparison to the number of boards arranged with the longitudinal direction thereof aligned with the short-side direction of the chassis. Therefore, the number of control units configured to control turn-on and turn-off of the point light sources can be reduced and thus the cost can be reduced.

The point light sources may be light emitting diodes.
With this configuration, the light sources with long lives and low power consumption can be provided.

The point light sources may be light emitting diodes including blue light emitting chips with phosphors having alight emitting peak in an yellow range and applied to the respective blue light emitting chips to emit white light.
The point light sources may be light emitting diodes including blue light emitting chips with phosphors having a light emitting peak in a green range and having a light emitting peak in a red range and applied to the respective blue light emitting chips to emit white light.
The point light sources may be light emitting diodes including blue light emitting chips with phosphors having a light emitting peak in a green range and red light emitting chips. Each blue light emitting chip and each red light emitting chip are combined to emit white light.
The point light sources may be light emitting diodes, each including a blue light emitting chip, a green light emitting chip, and a red light emitting chip combined to emit white light.
When the light emitting diodes configured to emit white light, color variations are more likely to occur. For example, bluish white light may be produced. With the configuration of the present invention, the uniform overall color can be achieved and light with a substantially uniform color can be achieved.

Each point light source may include an ultraviolet light emitting chip and a phosphor.
The point light sources may include ultraviolet light emitting chips and phosphors having light emitting peaks in a blue range, in a green range, and in a red range, respectively.
When such light sources are used, color variations are more likely to occur. With the configuration of the present invention, the uniform overall color can be achieved and light with the substantially uniform color can be achieved.

The point light sources may be electrically connected in series.
With this configuration, the same amount of current is supplied to each point light source and thus the amounts of emitted light from the point light sources can be equalized. Therefore, the evenness in brightness on an illumination surface of the lighting device can be improved.

The lighting device may further include a diffuser lens mounted to the board so as to cover the point light sources and configured to diffuse light from the point light sources.
Because light is diffused by the diffuser lens, dot-like lamp images are less likely to appear even when the interval between the adjacent point light sources is increased. A substantially even brightness distribution can be achieved although the cost is reduced by reducing the number of the point light sources. Furthermore, by providing the diffuser lens, colors of light from the point light sources can be mixed and thus color variations can be reduced. Therefore, the colors can be further made uniform.

The diffuser lens is a light diffusing member configured to diffuse light.
With the diffuser lens, diffusion of light can be properly performed.

The diffuser lens has a surface treated by surface roughing on a board side.
By treating the surface of the diffuser lens by surface roughing such as texturing, the diffuser lens can further properly diffuse light.

To solve the problem described earlier, a display device according to the present invention includes the above lighting device and a display panel configured to provide display using light from the lighting device.
The lighting device in such a display device can produce light with the substantially uniform overall color. Therefore, the display device can provide good quality display with less unevenness.

An example of the display panel is a liquid crystal panel. Such a display device is applied to various uses such as a television or a desktop of a personal computer as a liquid crystal display device, and especially appropriate for a large-screen device.

The television receiver according to the present invention includes the above display device.
With this television receiver, a device with high visibility without unevenness can be provided.

### Advantageous Effect of the Invention

According to the lighting device of the present invention, light with the substantially uniform overall color can be achieved. Because the display device of the present invention includes such a lighting device, the display device can provide good quality display with less uneveness. Furthermore, because the television receiver of the present invention includes such a display device, a device with high visibility without uneveness can be provided according to the television receiver.

### BRIEF DESCRIPTION OF THE DRAWINGS

FIG. 1 is an exploded perspective view illustrating a general construction of a television receiver according to an embodiment of the present invention;
FIG. 2 is an exploded perspective view illustrating a general construction of a liquid crystal display device included in the television receiver;
FIG. 3 is a cross-sectional view illustrating a cross-sectional configuration of the liquid crystal display device along the long-side direction;
FIG. 4 is a cross-sectional view illustrating a cross-sectional configuration of the liquid crystal display device along the short-side direction;
FIG. 5 is a plan view illustrating an arrangement of LED boards inside the chassis;
FIG. 6 is a partial magnified cross-sectional view illustrating a part mounted on the LED board;
FIG. 7 is a partial magnified plan view illustrating the part mounted on the LED board;
FIG. 8 is a color space chromaticity diagram created by the International Commission on Illustration (CIE) in 1931;
FIG. 9 is a partial magnified view illustrating a classification of color ranges in FIG. 7;
FIG. 10 is a schematic view illustrating an arrangement of LEDs in different color ranges on the LED board;
FIG. 11 is a schematic view illustrating a different arrangement of LEDs in different color ranges on the LED board;
FIG. 12 is a schematic view illustrating a different arrangement of LEDs in different color ranges on the LED board;
FIG. 13 is a schematic view illustrating a different arrangement of LEDs in different color ranges on the LED board;
FIG. 14 is a schematic view illustrating different connections of the LED boards; and
FIG. 15 is a schematic view illustrating a different arrangement of the LEDs.

### MODE FOR CARRYING OUT THE INVENTION

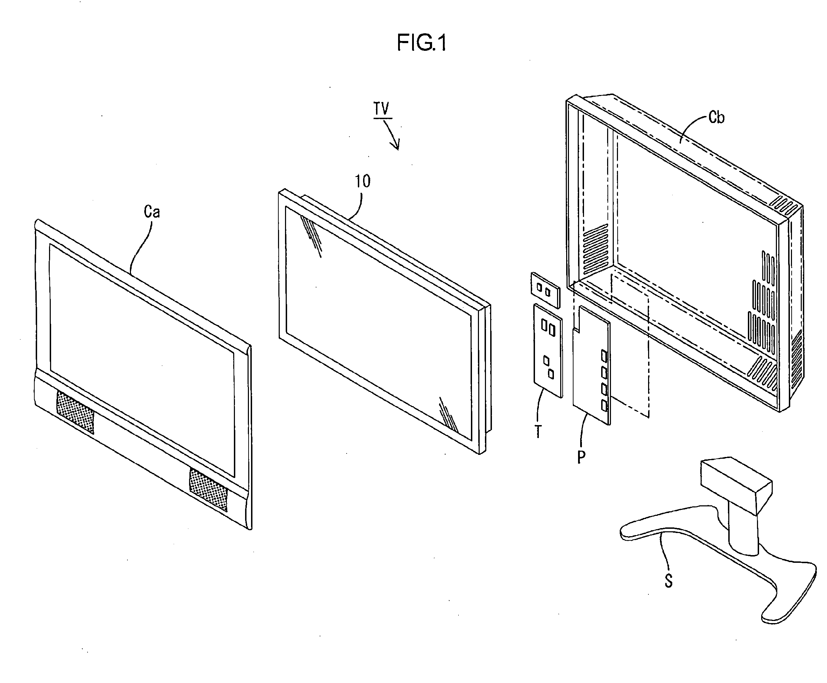

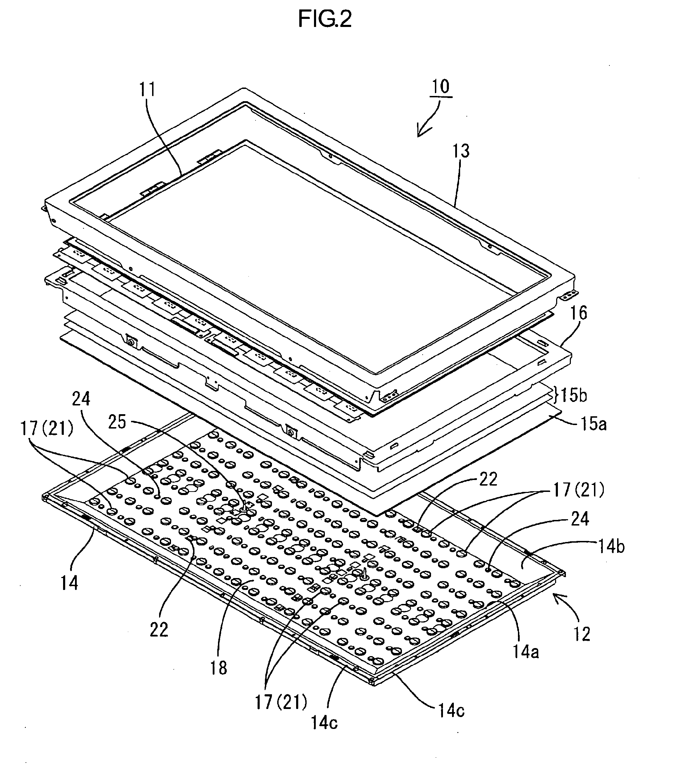

An embodiment of the present invention will be explained with reference to FIGS. 1 to 10.
First, a television receiver TV including a liquid crystal display device 10 will be explained.
As illustrated in FIG. 1, the television receiver TV of this embodiment includes the liquid crystal display device 10, front and rear cabinets Ca, Cb that house the liquid crystal display device 10 therebetween, a power source P, a tuner T and a stand S. An overall shape of the liquid crystal display device (a display device) 10 is a landscape rectangular. The liquid crystal display device 10 is held in a vertical position. As illustrated in FIG. 2, it includes a liquid crystal panel 11 as a display panel, and a backlight device 12 (a lighting device) , which is an external light source. They are integrally held by a bezel 13 having a frame-like shape.

Next, the liquid crystal panel 11 and the backlight device 12 included in the liquid crystal display device 10 will be explained (see FIGS. 2 to 4).
The liquid crystal panel (display panel) 11 is constructed such that a pair of glass substrates is bonded together with a predetermined gap therebetween and liquid crystal is sealed between the glass substrates. On one of the glass substrates, switching components (e.g., TFTs) connected to source lines and gate lines that are perpendicular to each other, pixel electrodes connected to the switching components, and an alignment film are provided. On the other substrate, a color filter having color sections such as R (red), G (green) and B (blue) color sections arranged in a predetermined pattern, counter electrodes, and an alignment film are provided. Polarizing plates are attached to outer surfaces of the substrates.

As illustrated in FIG. 2, the backlight device 12 includes a chassis 14, an optical sheet set 15 (a diffuser plate 15a and a plurality of optical sheets 15b arranged between the diffuser plate 15a and the liquid crystal panel 11), and frames 16. The chassis 14 has a box-like shape and an opening on the light emitting side (on the liquid crystal panel 11 side). The optical sheet set 15 is arranged so as to cover the opening of the chassis 14. The frames 16 are arranged along the long sides of the chassis 14. The frames 16 hold the long-side edges of the diffuser plate 15a to the chassis 14. The outer edges of the diffuser plate 15a are sandwiched between the chassis 14 and the frames 16. Light emitting diodes (point light sources, hereinafter referred to as LEDs) 17 are arranged in the chassis 14. A light emitting side of the backlight device 12 is a side closer to the diffuser plate 15a than the cold cathode tubes 17.

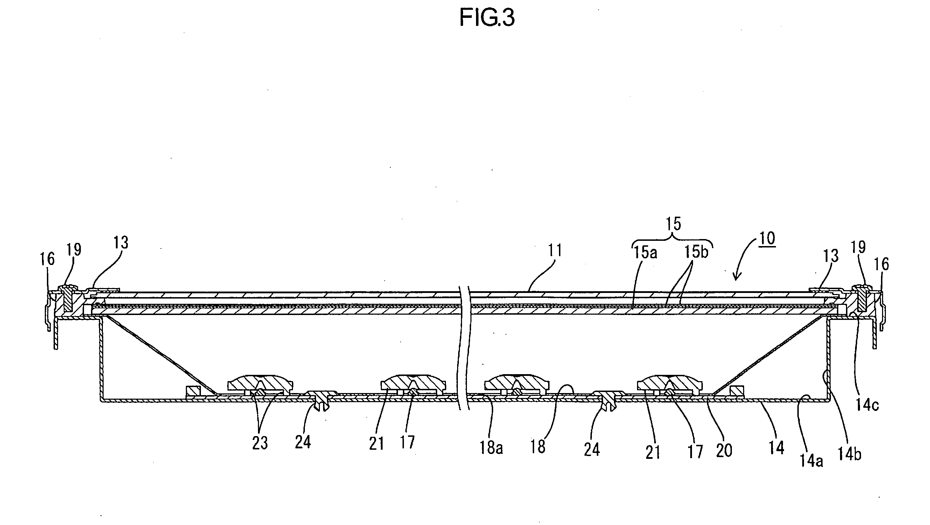

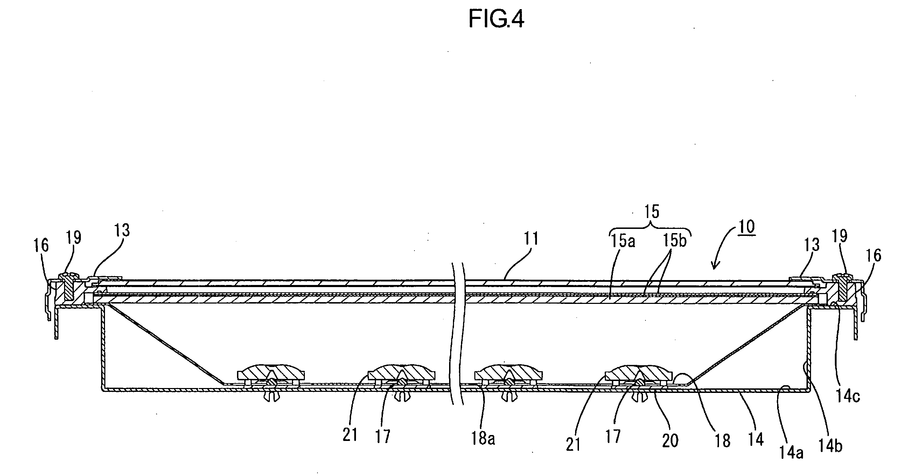

The chassis 14 is made of metal. It includes a bottom plate 14a, side plates 14b, and receiving plates 14c. The bottom plate 14a has a rectangular shape similar to the liquid crystal panel 11. Each side plate 14b rises from an outer edge of the corresponding side of the bottom plate 14a. Each receiving plate 14c projects from the top edge of the corresponding side plate 14b. The chassis 14 has a shallow-box-like overall shape with an opening on the front side. As illustrated in FIGS. 3 and 4, the frames 16 are placed on the respective receiving plates 14c of the chassis 14. Outer edges of a reflection sheet 18 and optical sheet set 15 are sandwiched between the receiving plates 14c and the frames 16. The reflection sheet 18 will be explained later. Furthermore, mounting holes 16a are provided in the top surfaces of the frames 16. The bezel 13, the frames 16 and the chassis 14 are bound together with screws 19.

The optical sheet set 15 including the diffuser plate 15a and the optical sheets 15b is arranged on the opening side of the chassis 14. The diffuser plate 15a is constructed of a plate-like member made of synthetic resin with light-scattering particles dispersed therein. The diffuser plate 15a diffuses point light emitted from the LEDs 17 that are the point light sources. The outer edges of the diffuser plate 15a are placed on the receiving plates 14c of the chassis 14, as explained earlier. The outer edges of the diffuser plate 15a do not receive strong vertical forces that restrain the outer edges in the vertical direction.

Two optical sheets 15b layered and arranged on the diffuser plate 15a. Each optical sheet 15b has a sheet-like shape with a thickness larger than that of the diffuser plate 15a. Examples of the optical sheets 15b are a diffuser sheet, a lens sheet and a reflection-type polarizing sheet. Each optical sheet 15b can be selected from those sheets accordingly. The optical sheet 15b converts light emitted from the LEDs 17 and passed through the diffuser plate 15a into a planar light. The liquid crystal display panel 11 is arranged on the top surface of the optical sheet 15b.

A light reflection sheet 18 is arranged on an inner surface of the bottom plate 14a of the chassis 14. The light reflection sheet 18 is a synthetic resin sheet having a surface in white color that provides high light reflectivity. The reflection sheet 18 has holes 18a at locations corresponding to the diffuser lenses 21, which will be explained later. An entire area of the bottom plate 14a of the chassis 14 is covered by the reflection sheet 18 except for areas in which the diffuser lenses 21 are arranged. The diffuser lenses 21 appear on the optical sheet set 15 side through the holes 18a. The edge portions of the light reflection sheet 18 are lifted at angles so as to cover the inner surfaces of the side plates 14b. The outer edges of the reflection sheet 18 are placed on the respective receiving plate 14c of the chassis 14. With this light reflection sheet 18, light emitted from the LEDs 17 is reflected toward the diffuser plate 15a.

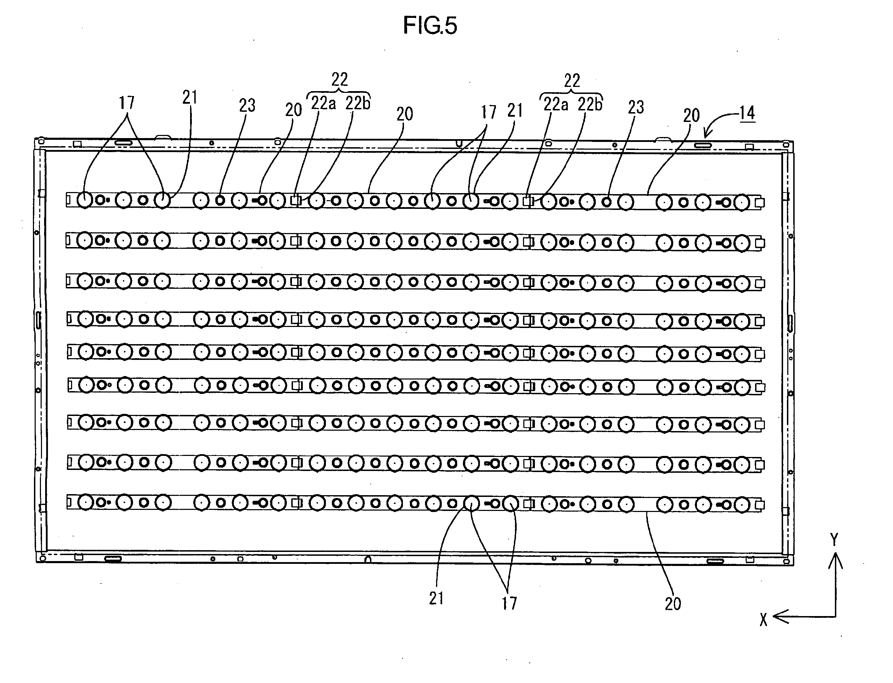

The LED boards (a board) 20 on which the LEDs 17 and the diffuser lenses 21 are mounted are arranged on the inner surface of the bottom plate 14a of the chassis 14. Each LED board 20 is a synthetic resin sheet with a surface on which wiring patterns are provided. The wiring patterns are metal films such as copper foils formed on the surface of the LED board 20. As illustrated in FIG. 5, each LED board 20 is an elongated plate-like member. The LED boards 20 are arranged with the longitudinal direction thereof aligned with the long-side direction (the X-axis direction) of the chassis 14. More specifically, three LED boards 20, 20, 20 are arranged in line with their longitudinal direction along the long-side direction of the chassis 14. The LED boards 20, 20, 20 are electrically and physically connected by connectors 22. Nine lines, each of which includes three LED boards 20, 20, 20, are arranged in the short-side direction (the Y-axis direction) of the chassis 14. A control unit, which is not illustrated, is connected to the LED boards 20. The control unit is configured to supply power required for turning on the LEDs 17 and control driving of the LEDs 17.

Each connector 22 that connects the adjacent LED boards 20 is in white that provides high light reflectivity. In FIG. 5, each connector 22 includes a first connector 22a and a second connector 22b. The first connector 22a is attached to the left LED board 20 of the adjacent LED boards 20. The connector 22b is attached to the right LED board 20 of the adjacent LED boards 20. The first connector 22a projects outward from the edge of the LED board 20 in the longitudinal direction. The adjacent LED boards 20, 20 are connected by the first connector 22a and the second connector 22b when they are engaged.

Six LEDs 17 are arranged in line on each LED board 20 along the longitudinal direction of the LED board 20. More specifically, six LEDs 17 are arranged at equal intervals and surface mounted on the LED board 20. Each LED 17 is prepared by applying a phosphor that has a light-emitting peak in a yellow range to a mono-color light emitting chip that emits blue light so that the LED 17 emits white light. The LEDs 17 are electrically connected in series via the wiring pattern on the LED board 20. The LED 17 may be prepared by applying a phosphor that has a light emitting peak in a green range and a phosphor that has a light emitting peak in a red range to a blue light emitting chip so that the LED 17 emits white light. The LED 17 may be prepared by a phosphor that has a light-emitting peak in a green range to a blue light emitting chip and combing it with a red light emitting chip so that the LED 17 emits white light. The LED 17 may be prepared by combining a blue light emitting chip, a green light emitting chip, and a red light emitting chip so that the LED 17 emits white light.

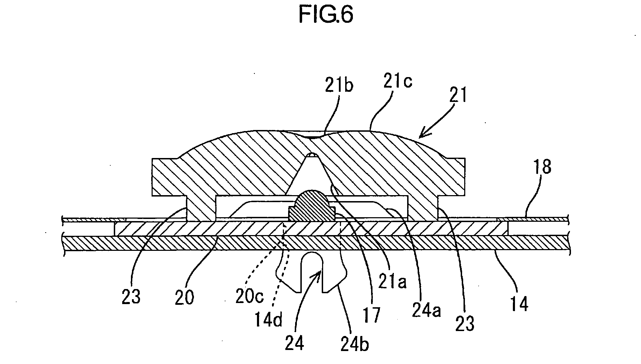

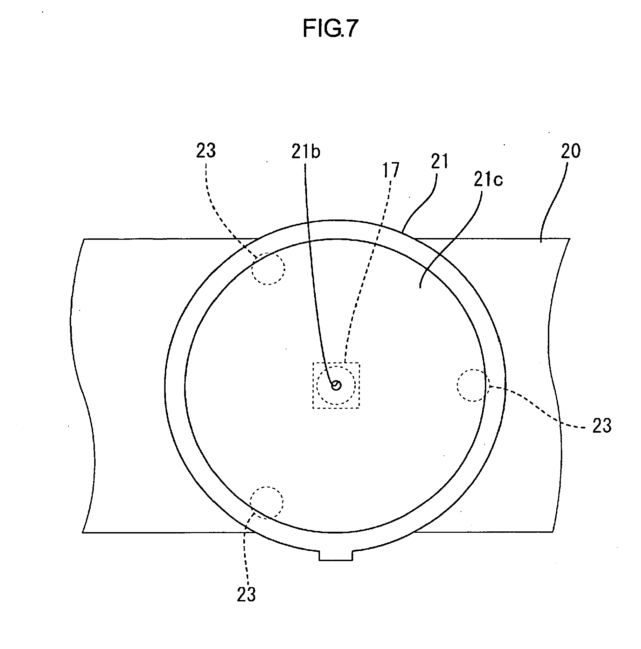

As illustrated in FIG. 6, the diffuser lenses 21 are mounted on each LED board 20. Each diffuser lens 21 has a dome-like shape and covers the corresponding LED 17. Each diffuser lens 21 is a light diffusing member having high light diffuseness. The diffuser lens 21 is made of synthetic resin such as acrylic resin. Three legs 23 project from edge areas of the bottom surface of each diffuser lens 21. As illustrated in FIG. 7, the legs 23 are arranged at about equal intervals (about 120-degree intervals) along the edge of the diffuser lens 21, and fixed to the surface of the LED board 20 with adhesive or thermoset resin. An incident recess 21a is provided in an area of the bottom surface of the diffuser lens 21 (facing the LED 17 and the LED board 20) overlapping the LED 17 in plan view. The incident recess 21 is a cone-like hole that extends toward the top. The light from the LED 17 enters the incident recess 21a. The bottom surface of the diffuser lens 21 is treated by surface roughing such as texturing. A recess 21b is provided in a central area (overlapping the LED 17 in plan view) of the top surface of the diffuser lens 21 (facing the diffuser plate 15a). The recess 21b extends toward the bottom. The top surface includes two gently curved continuous light exit surfaces 21c. Light emitted from the LED 17 is refracted as it travels through an air layer, the incident recess 21a, and the light exit surface 21c. As a result, the light is diffused and emitted as planar light that travels in a wide-angle area from the light exit surface toward the diffuser plate 15a.

Each LED board 20 is fixed to the bottom plate 14a of the chassis 14 by rivets 24. Each rivet 24 includes a holddown portion 24a and a lock portion 24b. The holddown portion 24a has a disk-like shape. The lock portion 24b projects downward from the holddown portion 24a. The LED board 20 has insertion holes 20c through which the lock portion 24b are passed. The bottom plate 14a of the chassis 14 has mounting holes 14d that communicate with the respective insertion holes 20c. An end of the lock portion 24b of each rivet 24 is a wide portion that is elastically deformable. When the end of the lock portion 24b is passed through the insertion hole 20c and the mounting hole 14d, it is held against the rear surface of the bottom plate 14a of the chassis 14. With this configuration, each rivet 24 fixes the LED board 20 to the bottom plate 14a while pressing the LED board 20 with the holddown portion 24a.

As illustrated in FIG. 2, support pins 25 are arranged on the top surfaces of the rivets 24 located near the central part of the bottom plate 14a of the chassis 14. Each support pin 25 has a cone-like shape that narrows toward the tip. If the diffuser plate 15a bends downward, the tips of the support pins 25 are in point contact with the diffuser plate 15a. Namely, the support pins 25 support the diffuser plate 15a from below. Furthermore, the rivets 24 can be easily handled by holding the support pins 25.

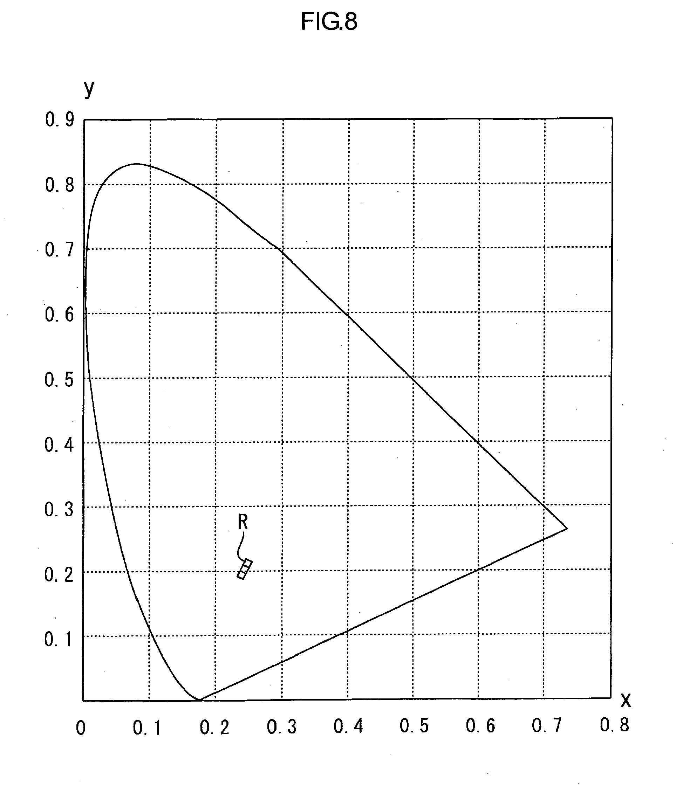

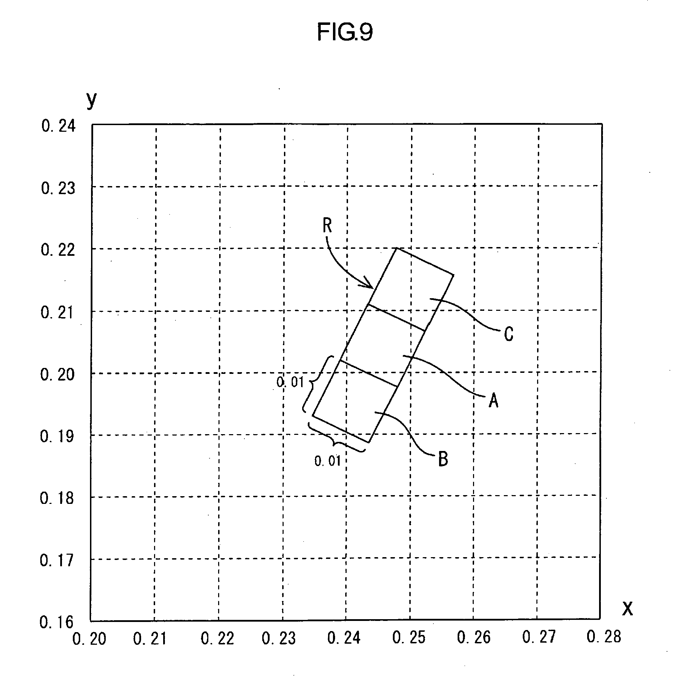

Colors of light emitted by the white LEDs 17 are not the same white color. Some color variations may be present in white light. The color ranges of the LEDs 17 will be explained with reference to FIGS. 8 and 9. FIG. 8 is a color space chromaticity diagram created by the International Commission on Illustration (CIE) in 1931. FIG. 9 is a partial magnified view illustrating a classification of color ranges in FIG. 8.
The colors of LEDs 17 in this embodiment vary within a range of a use area R indicated by a solid line in the CIE1931 coordinate graph in FIG. 8. As illustrated in FIG. 9, the use area R is divided into three color ranges A, B, and C, respectively. Each area has a rectangular shape with sides, each having a length of 0.01 coordinate distance. More specifically, the center range of the use range R is the color range A. The color range A corresponds to the target color, and the largest number of the LEDs 17 is in this range. The range lower than the color range A is the color range B. The range above the color range A is the color range C. The LEDs 17, colors of which are off the target color, are in color ranges B and C. The color range A and the color range B are adjacent color ranges. The color range A and the color range C are adjacent color ranges. Namely, the color ranges B and C are not adjacent color ranges. The LEDs 17 with the color range A, B, or C in each square with the sides each having a length of 0.01 coordinate distance emit light with colors that are not recognized as different colors.

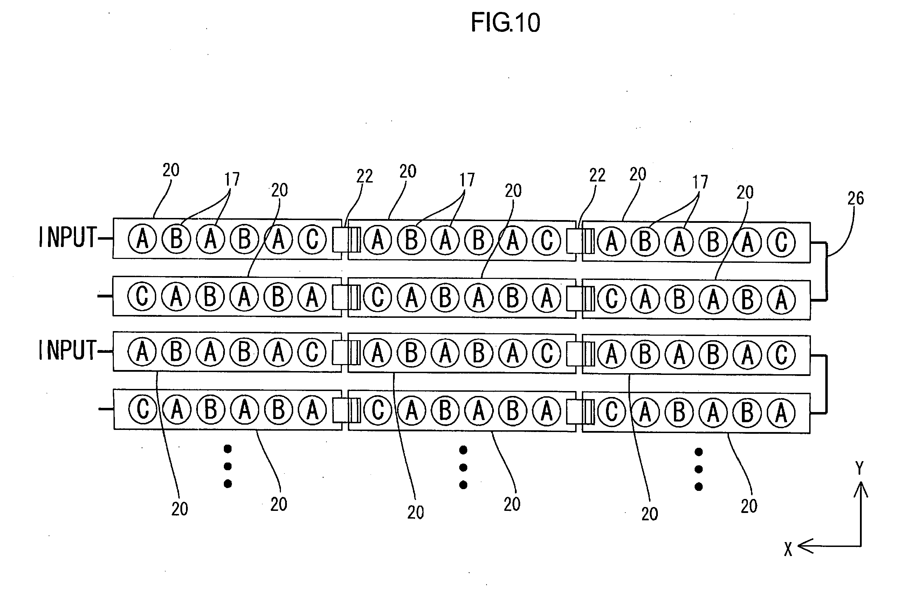

Next, an arrangement of the LEDs 17 in different color ranges on the LED boards 20 will be explained with reference to FIG. 10. FIG. 10 is a schematic view illustrating the arrangement of the LEDs in different color ranges on the LED board 20.
As illustrated in FIG. 10, the LEDs 17 in different color ranges A, B, and C are mounted on each LED board 20. When the LED boards 20 are viewed with respect to rows (in the X-axis direction, the long-side direction of the chassis 14, the longitudinal direction of the LED boards 20) , the first row located uppermost includes three LED boards 20, 20, 20 connected in series by the connectors 22. Each LED board 20 includes LEDs 17 in the color ranges A, B, A, B, A and C arranged in this sequence from the left in FIG. 10. Namely, the adjacent LEDs 17, 17 on the LED board 20 are in the different color ranges (A and B, or A and C).

The second row under the first row includes three LED boards 20, 20, 20 connected in series by the connectors 22 such that each LED board 20 is rotated 180 degrees from the LED board 20 in the first row. Namely, each LED board 20 in the second row includes the LEDs 17 in the color ranges C, A, B, A, B, and A in this sequence from the left in FIG. 10 as in the reverse sequence relative to the LEDs 17 in the first row. The adjacent LEDs 17, 17 on each LED board 20 in the second row are in the adjacent color ranges (A and B or A and C). Similarly, the LED boards 20 in the third row are arranged in the same manner as those in the first row, and the LED boards 20 in the fourth row are arranged in the same manner as those in the second row. The LED boards 20 in the other rows are also arranged in the above manner.

With respect to the X-axis direction, the adjacent LEDs 17, 17 arranged on the adjacent LED boards 20 that are connected in series in the first row, respectively, are classified in the adjacent color ranges (A and C). The adjacent LEDs 17, 17 arranged on the adjacent LED boards 20 that are connected in series in the second row, respectively, are classified in the adjacent color ranges (A and C). Regarding all LEDs 17, the adjacent LEDs 17, 17 with respect to the X-axis direction are classified in the adjacent color ranges (A and C). Namely, the LEDs 17 in the color ranges that are not adjacent grades (i.e., B and C) are not adjacently arranged with respect to the X-axis direction.

When the columns of LED boards 20 are viewed (in the Y-axis direction, the short-side direction of the chassis 14), in the first column located leftmost, the LEDs 17 in the color ranges A, C, A, C, A, ..... are arranged in this sequence. In the second column, the LEDs 17 in the color ranges B, A, B, A, B, A, ..... are arranged in this sequence. In the third column, the LEDs 17 in the color ranges A, B, A, B, ..... are arranged in this sequence. The LEDs 17 on each LED board 20 in the first column and the LEDs 17 on each LED board in the second column arranged parallel and adjacently are classified in the adjacent color ranges (A and B or A and C). Namely, the LEDs 17 in the color ranges that are not adjacent color ranges (i.e., B and C) are not adjacently arranged with respect to the Y-axis direction.

In this embodiment, the rightmost LED board 20 in the first row and the rightmost LED board 20 in the second row are electrically connected to each other via the wiring 26. Therefore, the LEDs 17 on the LED board 20 in the first row and on the LED board 20 in the second row can be controlled by a single control unit to turn on when the drive power is supplied through the leftmost LED board 20 in the first row.

According to this embodiment, the LEDs 17 are classified in three color ranges A, B, and C according to colors of light. Each color range is defined by a square with each side having a length of 0.01 in the CIE 1931 color space chromaticity diagram. If the LEDs 17 in the same color range are used, a large number of the LEDs 17 needs to be manufactured to obtain the required number of the LEDs 17. The LEDs 17 that cannot be used may be included in the manufactured LEDs 17. As a result, the cost may increase. In this embodiment, the LEDs 17 in the different color ranges A, B, and C are used. In comparison to the configuration in which the LEDs 17 in the same color range are used, the LEDs 17 in wider color ranges can be used. This contributes to a cost reduction. Furthermore, colors in the entire area can be averages by using the LEDs 17 in the different color ranges A, B, and C. As a result, light with the uniform overall color can be achieved.

In this embodiment, a plurality of the LEDs 17 are arranged on the elongated LED boards 20. The LED boards 20 are installed in the chassis 14. In comparison to a configuration in which the LEDs 17 are installed in the chassis 14 one by one, the configuration of this embodiment can improve work efficiency.

The LEDs 17 are arranged in line along the longitudinal direction of the LED boards 20. The arrangement of the LEDs 17 is defined according to the arrangement of the LED boards 20. Therefore, the arrangement of the LEDs 17 can be easily designed.

The LEDs 17 are arranged at equal intervals on each LED board. The arrangement of the LEDs 17 is not altered according to the LED boards 20. Therefore, even when the size of the backlight unit 12 is altered, the LED boards 20 can be still used.

The LEDs 17 in the adjacent color ranges A and B or A and C are adjacently arranged. Namely, the colors of the adjacent LEDs 17 do not significantly differ from one another. Therefore, color variations are less likely to occur.

The LED boards 20 are arranged parallel to one another. The adjacent LEDs 17 with respect to the parallel arrangement direction of the LED boards 20 are in the adjacent color ranges A and B or A and C. With this configuration, the color ranges of the adjacent LEDs 17 are not significantly different. Therefore, color variations are less likely to occur.

The LED boards 20, 20 adjacently arranged with respect to the parallel arrangement direction of the LED boards 20 are rotated 180 degrees from each other. By using one kind of LED boards 20 inversely orientated from one another, the arrangement of the LEDs 17 in the different color ranges can be altered. With this configuration, color variations are less likely to occur.

The LED boards 20 are arranged along the longitudinal direction thereof and the adjacent LED boards 20 are connected by the connectors 22.
By preparing the LED boards 20 having different lengths, that is, on which different numbers of LEDs 17 are arranged, and connecting them by the connectors 22, the LED boards 20 can be used for different sizes of the backlight units 12. Namely, the LED boards 20 exclusively for a specific size of the backlight unit 12 are not required. This contributes to a cost reduction.

In this embodiment, each connector 22 includes the first connector 22a and the second connector 22b. The first connector 22a projects from the end of the long side of the LED board 20.
Because at least one of the first connector 22a and the second connector 22b project outward from the LED board 20, the first connector 22a and the second connector 22b can be smoothly engaged when the adjacent LED boards 20, 20 are connected by the first connector 22a and the second connector 22b.

The connectors 22 are in white color.
The connectors 22 have relatively high light reflectivity. Therefore, the connectors 22 are less likely to absorb light and thus uneven brightness is less likely to occur.

The chassis 14 has a rectangular plan-view shape. Each LED board 20 is arranged with the long-side direction thereof aligned with the longitudinal direction of the chassis 14.
In comparison to the configuration in which each LED board 20 is arranged with the longitudinal direction thereof aligned with the short-side direction of the chassis 14, the number of the LED boards 20 can be reduced. Therefore, the number of control units for turning on and off the LEDs 17 can be reduced. As a result, the cost can be reduced.

The LEDs 17 are used as light sources. Therefore, the light sources with long lives and low power consumptions can be provided.

In this embodiment, each LED 17 is prepared by applying the phosphor having the light emitting peak in the yellow range to the blue light emitting chip and used as a light source.
When the white LEDs 17 are used, the colors tend to vary. The light may be bluish white depending on conditions of the phosphors (e.g., concentrations, film thicknesses). With the configuration of this embodiment, the colors in the entire area are averaged, and light with a substantially uniform overall color can be achieved.

The LEDs 17 are electrically connected in series.
Because an equal amount of current is supplied to each LED 17, the amounts of light emitted from the LEDs 17 can be equalized. Therefore, evenness in brightness on the illuminated surface of the backlight unit 12 improves.

The diffuser lenses 21 configured to diffuse the light from the respective LEDs 17 are mounted so as to cover the respective LEDs 17. The light is diffused by the diffuser lenses 21. Therefore, even when a distance between the adjacent LEDs 17, 17 is increased, dot-like lamp images are less likely to appear. By reducing the number of the LEDs 17, the cost can be reduced. Furthermore, a substantially uniform brightness distribution can be achieved. With the diffuser lenses 21, colors of light from the LEDs 17 are mixed and thus color variations can be reduced. Therefore, the colors are further averaged.

The diffuser lenses 21 are light diffusing members configured to diffuse light. Therefore, the light can be properly diffused.

Because the surfaces of the diffuser lenses 21 on the LED board 20 side are treated by surface roughing. Therefore, the light is further properly diffused.

The embodiment according to the present invention has been described above. The present invention is not limited to the above embodiment. The following modifications may be included in the technical scope of the present invention, for example. In the following modifications, the same elements and components as those in the above embodiment will be indicated by the same symbols and will not be explained.

### <First modification>

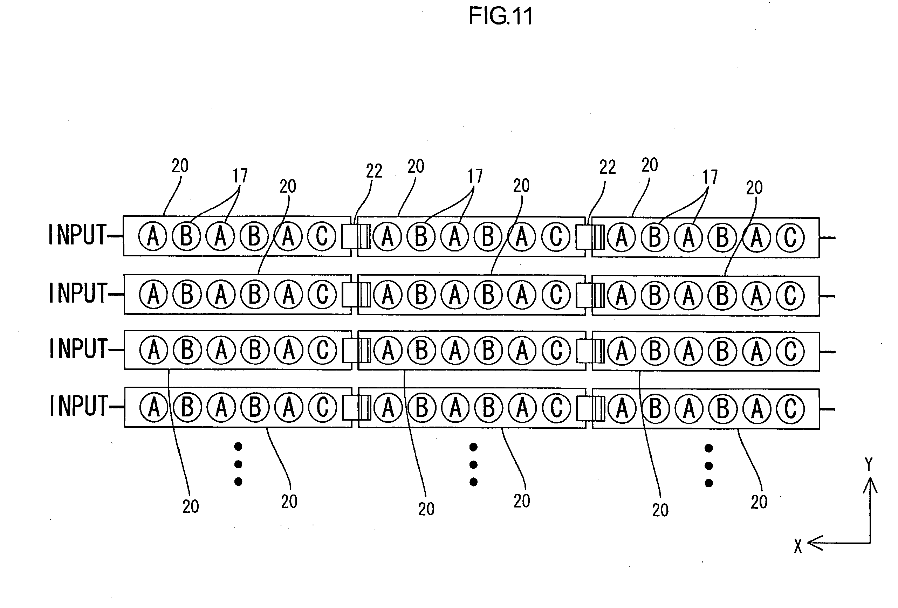

As a modification of the arrangement of the LEDs 17, an arrangement of the LEDs 17 in FIG. 11 can be used. FIG. 11 is a schematic view illustrating a different arrangement of LEDs in different color ranges on the LED board.
In FIG. 11, when the LED boards 20 are viewed along the X-axis direction (the row direction, the longitudinal direction of the LED board 20), the first row including three LED boards 20, 20, 20 electrically and physically connected by the connectors 22 is located at the uppermost of the arrangement. The LEDs 17 in the color ranges A, B, A, B, A and C are arranged in this sequence from the left on each LED board 20 in FIG. 11. The adjacent LEDs 17, 17 on the LED board 20 are in the adjacent color ranges (A and B, or A and C). Each of the second row, the third row, the forth row..... also includes three LED boards 20 connected in series with respect to a direction same as the first row. When the LED boards 20 are viewed along the Y-axis direction (the arrangement direction of the LED boards 20), the LEDs 17 in the color range A are arranged in the first column located at the leftmost of the arrangement in FIG. 11. The LEDs 17 in the color range B are arranged in the second column. Namely, the LEDs 17, 17 arranged adjacently with respect to the arrangement direction of the LED boards 20 are in the same color range (A and A, B and B, or C and C).

With this configuration, the color ranges of the adjacent LEDs 17, 17 do not significantly differ from each other. Therefore, the color variations are less likely to occur. Especially in this example, kinds of the LED boards 20 can be reduced. This contributes to a cost reduction.

### <Second Modification>

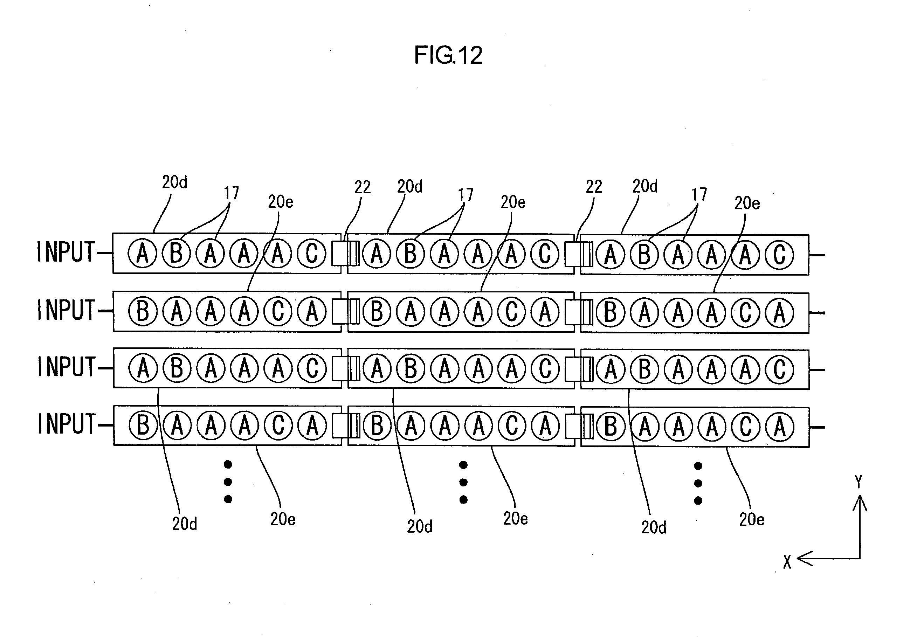

As a modification of the arrangement of the LEDs 17, an arrangement of the LEDs 17 in FIG. 12 can be applied. FIG. 12 is a schematic view illustrating a different arrangement of the LEDs in different color ranges on the LED boards.
In FIG. 12, when LED boards 20d and 20e are viewed along the X-axis direction (the row direction, the longitudinal direction of the LED board 20d or 20e), the first row including three first LED boards 20d, 20d, 20d electrically and physically connected by the connectors 22 is located at the uppermost of the arrangement. The LEDs 17 in the color ranges A, B, A, A, A and C are arranged in this sequence from the left on each first LED board 20d in FIG. 12. The adjacent LEDs 17, 17 on the first LED board 20d in the same color range (A and A) or the adjacent color ranges (A and B or A and C). The second row includes three second LED boards 20e, 20e, 20e electrically and physically connected by the connectors 22. The LEDs 17 in the color ranges B, A, A, A, C, and A are arranged in this sequence from the left on each second LED board 20e in FIG. 12. The adjacent LEDs 17, 17 on the second LED board 20e are in the same color range (A and A) or the adjacent color ranges (A and B, or A and C).

In this example, the arrangement of the LEDs 17 in the different color ranges on the first LED boards 20d in the first row is different from that of the LEDs 17 in the different color ranges on the second LED boards 20e in the second row with respect to the arrangement direction of the LED boards (the first LED boards 20d and the second LED boards 20e).
With this configuration, the color ranges of the LEDs 17, 17 arranged adjacently with respect to the arrangement direction of the LED boards 20d, 20e (the row direction) do not significantly differ from each other. Therefore, the color variations are less likely to occur. The configuration of this example is especially preferable if the number of the LEDs 17 in the color range A corresponding the target color is significantly larger than that of the LEDs 17 in the color ranges B or C.

### <Third Modification>

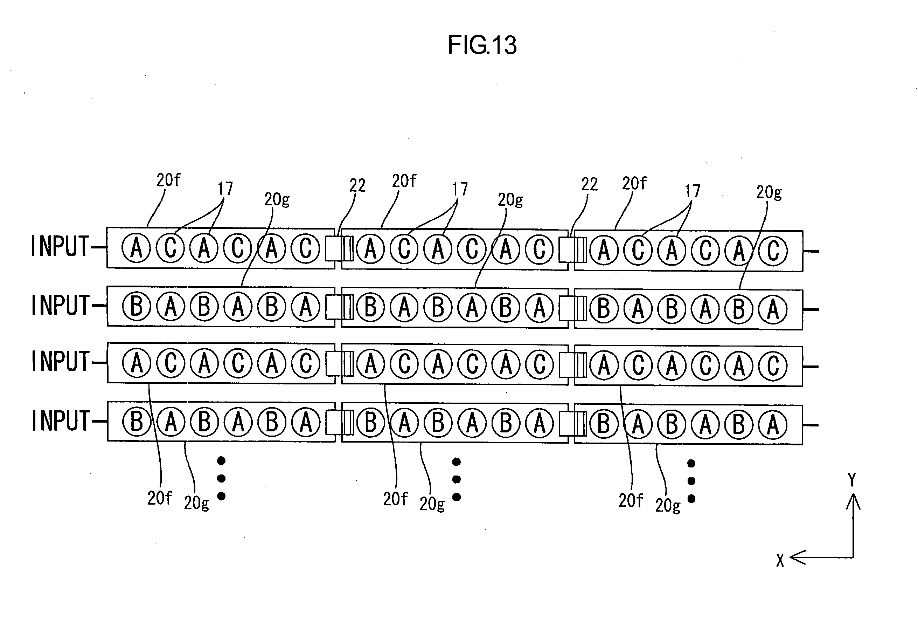

As a modification of the arrangement of the LEDs 17, an arrangement of the LEDs 17 in FIG. 13 can be used. FIG. 13 is a schematic view illustrating a different arrangement of the LEDs in different color ranges on the LED boards.
In FIG. 13, when the LED boards 20f and 20g are viewed along the X-axis direction (the row direction, the longitudinal direction of an LED board 20f or 20g), the first row including three third LED boards 20f, 20f, 20f electrically and physically connected by the connectors 22 is located at the uppermost of the arrangement. The LEDs 17 in the color ranges A, C, A, C, A and C are arranged in this sequence from the left on each third LED board 20f in FIG. 13. The adjacent LEDs 17, 17 on the third LED board 20f are in the adjacent color ranges (A and C). The second row includes three fourth LED boards 20g, 20g, 20g electrically and physically connected by the connectors 22. The LEDs 17 in the color ranges B, A, B, A, B, and A are arranged in this sequence from the left on each fourth LED board 20g in FIG. 13. The adjacent LEDs 17, 17 on the fourth LED board 20g are in the adjacent color ranges (A and B).
When the arrangement of the LEDs 17 is viewed along the column direction (the Y-axis direction), the LEDs 17 in the first column located leftmost in FIG. 13 are in the color ranges A, B, A, B ...... The LEDs 17 in the second column are in the color ranges C, A, C, A ...... These arrangements of the LEDs 17 are repeated in other columns. The adjacent LEDs 17, 17 on the third LED board 20f and the fourth LED board 20e that are arranged parallel to each other are in the adjacent color ranges (A and B, or A and C) with respect to the column direction (the Y-axis direction).

With this configuration, the color ranges of the LEDs 17, 17 arranged adjacently with respect to the row direction or the column direction are not significantly different. Therefore, the color variations are less likely to occur.

### <Fourth Modification>

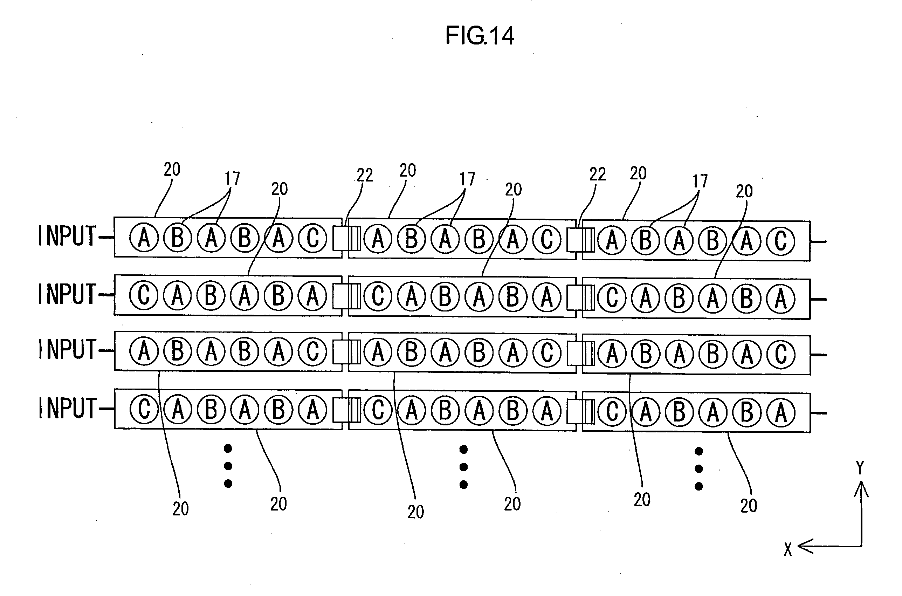

As a modification of the connection of the LED boards 20, connections of the LED boards 20 in FIG. 14 can be applied. FIG. 14 is a schematic view illustrating the different connections of the LED boards.
In FIG. 14, the first row located at the uppermost of the arrangement includes three LED boards 20, 20, 20 electrically and physically connected by the connectors 22. The second row includes three LED boards 20, 20, 20 rotated 180 degrees from the LED boards 20, 20, 20 in the first row and connected by the connectors 22. In this example, the LED board 20 in the first row and the LED board 20 in the second row are not connected to each other via wiring and electrically isolated from each other. Namely, power for driving the LEDs 17 is input to the leftmost LED board 20 in each row.

With this configuration, the LEDs 17 in each row, for example, the LEDs 17 in the first row or the second row, can be independently driven.

### <Fifth Modification>

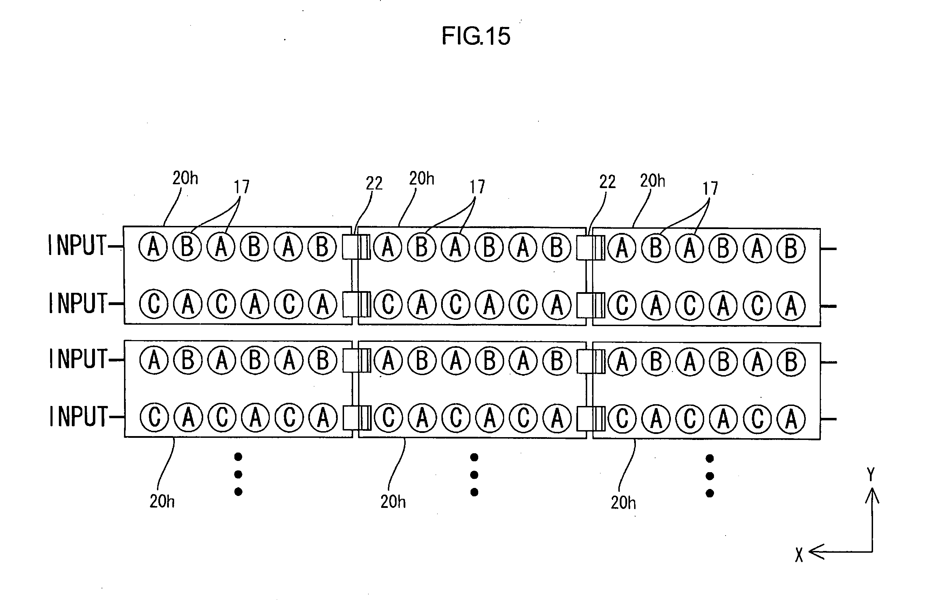

As a modification of the arrangement of the LEDs 17, an arrangement of the LEDs 17 in FIG. 15 can be used. FIG. 15 is a schematic view illustrating the different arrangement of the LEDs.
In FIG. 15, when the LED boards 20h are viewed along the X-axis direction (the row direction, the longitudinal direction of an LED board 20h), three fifth LED boards 20h are electrically and physically connected by the connectors 22. The LEDs 17 are arranged in two lines along the Y-axis direction (the short-side direction of the LED board 20h) on the fifth LED boards 20h and electrically connected in series. The first line on each fifth LED board 20h includes the LEDs 17 in the color ranges A, B, A, B, A and B arranged in this sequence from the left in FIG. 15. The adjacent LEDs 17, 17 in the first line on the fifth LED board 20h are in the adjacent color ranges (A and B). The second line on each fifth LED board 20h includes the LEDs 17 in the color ranges C, A, C, A, C, and A arranged in this sequence from the left in FIG. 15. The adjacent LEDs 17, 17 in the second line on the fifth LED board 20h are in the adjacent color ranges (A and C).

When the LED boards 20h are viewed along the Y-axis direction (the column direction, the short-side direction of the LED board 20h), the adjacent LEDs 17, 17 are electrically connected in parallel. The LEDs 17 in the first column located at the leftmost of the arrangement are in the color ranges A and C. The LEDs 17 in the second column are in the color ranges B and A. Therefore, the LEDs 17, 17 arranged adjacently with respect to the column direction (the Y-axis direction) are in the adjacent color ranges (A and B, or A and C).

In this example, the LEDs 17 are arranged in multiple lines (i.e., two lines) along the longitudinal direction of the fifth LED board 20h. Therefore, the number of the LED boards 20 (the fifth LED boards 20h) relative to the number of the LEDs 17 can be reduced. Namely, the number of parts can be reduced and the work efficiency can be improved.

### <Other Embodiments>

The embodiments according to the present invention have been described. The present invention is not limited to the embodiments explained in the above description with reference to the drawings. The following embodiments may be included in the technical scope of the present invention, for example.

(1) In the above embodiments, three color ranges are used. However, the number of color ranges is not limited to three. Two color ranges or four or more color ranges may be used.

(2) In the above embodiments, three LED boards are arranged along the longitudinal direction of the chassis (the X-axis direction) and connected. However, the number of the LED boards may be one or two, or more than three. Furthermore, the number of the LEDs arranged on each LED board is not limited to six. Any number of the LEDs can be arranged on each LED board.

(3) In the above embodiments, the LED boards on which the LEDs are arranged in the same layout according to the color ranges with respect to the longitudinal direction of the chassis (the X-axis direction). However, LED boards on which the LEDs are arranged in different layout according to the color ranges may be connected.

(4) In the above embodiments, the white LEDs are used. However, the color of light is not limited to white. LEDs that emit any color may be used.

(5) In the above embodiments, the LEDs are arranged in a grid. However, the LEDs may be arranged in a honeycomb structure. Namely, the LEDs may be arranged at equal intervals or in staggered layout.

(6) In the above embodiments, the LED, each prepared by applying a phosphor having a light emitting peak in an yellow range to a blue light emitting chip to emit white light, are used as a light source. However a light source may be constructed of an ultraviolet light emitting chip having a light emitting peak around a wavelength of 380 nm and a phosphor that absorbs the ultraviolet light and produces fluorescence. With phosphors having light emitting peak in blue, green, and red ranges, respectively, white light can be achieved. The white light produced by the lighting device in the above configuration has smooth spectrum in a wide visible light range and thus has high color rendering properties. Color variation may be produced due to variations in distributed amount of the phosphors. However, the colors can be evened with the lighting device in the above configuration. Namely, the lighting device having high color rendering properties and fewer tendencies to produce color variations can be provided.

(7) In the above embodiments, the diffuser lenses are arranged so as to cover the respective LEDs . However, the diffuser lenses may not be required. By closely arranging the LEDs, dot-like lamp images are less likely to appear.

(8) In the above embodiments, the LEDs are used as point light sources. However, other types of light sources can be used.

(9) In the above embodiments, the optical sheet set includes the diffuser plate, the diffuser sheet, the lens sheet, and the reflection-type polarizing sheet. However, the optical may include two diffuser plates that are layered.

(10) In the above embodiments, the white connectors are used. However, the connectors can be made of materials in different colors, for instance, in ivory color, as long as they have high light reflectivities.

### EXPLANATION OF SYMBOLS

10: Liquid crystal display device (Display device), 11: Liquid crystal panel (Display panel), 12: Backlight device (Lighting device) , 14: Chassis, 17: LED (Point light source, light emitting diode), 20: LED board (Board), 21: Diffuser lens, 22: Connector, 22a: First connector, 22b: Second connector, A,B,C: Color ranges, TV: Television receiver.

## Claims

1. A lighting device comprising:
a plurality of point light sources classified in two or more color ranges according to colors of light, each color range being defined by a square with sides each having a length of 0.01 in a CIE 1931 color space chromaticity diagram; and
a chassis housing the point light sources in the different color ranges.

2. The lighting device according to claim 1, further comprising an elongated board installed in the chassis, wherein the point light sources are arranged on the board.

3. The lighting device according to claim 2, wherein the point light sources are arranged in line along a longitudinal direction of the board.

4. The lighting device according to any one of claims 2 and 3, wherein the point light sources are arranged at an equal interval on the board.

5. The lighting device according to any one of claims 2 to 4, wherein the point light sources are arranged in multiple lines along a longitudinal direction of the board.

6. The lighting device according to any one of claims 2 to 5, wherein the point light sources arranged adjacently to each other on the board are in the same color range or in the adjacent color ranges.

7. The lighting device according to any one of claims 2 to 6, wherein:
the board includes a plurality of boards arranged parallel to each other; and
the point light sources arranged adjacently in an arrangement direction of the boards are in the same color range or the adjacent color ranges.

8. The lighting device according to any one of claims 2 to 7, wherein:
the board includes a plurality of boards arranged parallel to each other; and
the point light sources are arranged such that an arrangement of the point light sources on the board in a first row according to the color ranges is different from an arrangement of the point light sources on the board in a second row according to the color ranges.

9. The lighting device according to any one of claims 2 to 8, wherein:
the board includes a plurality of boards arranged parallel to each other; and
the boards arranged adjacently in an arrangement direction thereof are rotated 180 degrees from each other with respect to the longitudinal direction thereof.

10. The lighting device according to any one of claims 2 to 9, wherein:
the board includes a plurality of boards arranged along the longitudinal direction thereof; and
the adjacent boards are connected by a connector.

11. The lighting device according to claim 10, wherein:
the connector includes a first connector and a second connector engaged with each other; and
at least one of the first connector and the second connector projects outward from an end of the board with respect to the longitudinal direction of the board.

12. The lighting device according to any one of claims 10 and 11, wherein the connector is in ivory color or white color.

13. The lighting device according to any one of claims 2 to 12, wherein:
the chassis has a rectangular plan-view shape; and
the board is arranged with a longitudinal direction thereof aligned with a longitudinal direction of the chassis.

14. The lighting device according to any one of claims 1 to 13, wherein the point light sources are light emitting diodes.

15. The lighting device according to any one of claims 1 to 14, wherein the point light sources are light emitting diodes including blue light emitting chips with phosphors having a light emitting peak in an yellow range and applied to the respective blue light emitting chips to emit white light.

16. The lighting device according to any one of claims 1 to 14, wherein the point light sources are light emitting diodes including blue light emitting chips with phosphors having light emitting peaks in a green range and in a red range, respectively, and applied to the respective blue light emitting chips to emit white light.

17. The lighting device according to any one of claims 1 to 14, wherein the point light sources are light emitting diodes including blue light emitting chips with phosphors having a light emitting peak in a green range and red light emitting chips, each blue light emitting chip and each red light emitting chip being combined to emit white light.

18. The lighting device according to any one of claims 1 to 14, wherein the point light sources are light emitting diodes, each including a blue light emitting chip, a green light emitting chip, and a red light emitting chip combined to emit white light.

19. The lighting device according to any one of claims
1 to 14, wherein each point light source includes an ultraviolet light emitting chip and a phosphor.

20. The lighting device according to any one of claims 1 to 14, point light sources include ultraviolet light emitting chips and phosphors having a light emitting peak in a blue range, in a green range, and in a red range, respectively.

21. The lighting device according to any one of claims 1 to 20, wherein the point light sources are electrically connected in series.

22. The lighting device according to any one of claims 1 to 21, further comprising a diffuser lens mounted to the board so as to cover the point light sources and configured to diffuse light from the point light sources.

23. The lighting device according to claim 22, wherein the diffuser lens is a light diffusing member configured to diffuse light.

24. The lighting device according to claim 22, wherein the diffuser lens has a surface treated by surface roughing on a board side.

25. A lighting device comprising:
a plurality of point light sources classified in two or more color ranges according to colors of light, each color range being defined by a square with sides each having a predefined length in a CIE 1931 color space chromaticity diagram;
a chassis housing the point light sources in the different color ranges; and
an elongated board installed in the chassis and on which the point sources are arranged,
wherein the point light sources arranged adjacently on the boards are in the same color range or the adjacent color ranges.

26. A lighting device comprising:
a plurality of point light sources classified in two or more color ranges according to colors of light, each color range being defined by a square with sides each having a predefined length in a CIE 1931 color space chromaticity diagram;
a chassis housing the point light sources in the different color ranges; and
elongated boards arranged parallel to each other and installed in the chassis and on which the point sources are arranged,
wherein the point light sources arranged adjacently in an arrangement direction of the boards are in the same color range or the adjacent color ranges.

27. A lighting device comprising:
a plurality of point light sources classified in two or more color ranges according to colors of light, each color range being defined by a square with sides each having a predefined length in a CIE 1931 color space chromaticity diagram;
a chassis housing the point light sources in the different color ranges; and
elongated boards arranged parallel to each other and installed in the chassis and on which the point sources are arranged,
wherein the point light sources are arranged such that an arrangement of the point light sources on the board in a first row according to the color ranges is different from an arrangement of the point light sources on the board in a second row according to the color ranges.

28. A lighting device comprising:
a plurality of point light sources classified in two or more color ranges according to colors of light, each color range being defined by a square with sides each having a predefined length in a CIE 1931 color space chromaticity diagram;
a chassis housing the point light sources in the different color ranges; and
elongated boards arranged parallel to each other and installed in the chassis and on which the point sources are arranged,
wherein the boards arranged adjacently in an arrangement direction thereof are rotated 180 degrees from each other with respect to the longitudinal direction thereof.

29. A display device comprising:
the lighting device according to any one of claims 1 to 28;
and
a display panel configured to provide display using light from the lighting device.

30. The display device according to claim 29, wherein the display panel is a liquid crystal display using liquid crystal.

31. A television receiver comprising the display device according to any one of claims 29 and 30.
